# FASCICULE DE BREVET EUROPEEN

(11) **EP 2 503 775 B1**
(45) Date de publication et mention de la délivrance du brevet: **20.08.2014**
(21) Numéro de dépôt: 12160051.4
(22) Date de dépôt: 19.03.2012
(51) Int. Cl.: H04N 5/355

(54) **Capteur d'image a double temps d'intégration et sélection conditionnelle**
Zweitakt-Bilderfassungsgerät mit Integration und konditioneller Auswahl
Image sensor with double integration time and conditional selection

(30) Priorité: 23.03.2011 FR 1152415
(43) Date de publication de la demande: 26.09.2012
(73) Titulaire: E2V Semiconductors, 38120 Saint Egreve (FR)
(72) Inventeur: Noiret, Andy, 68000 COLMAR (FR); Ligozat, Thierry, 38950 QUAIX EN CHARTREUSE (FR)
(74) Mandataire: Guérin, Michel

(56) Documents cités:
- EP-A1- 2 071 825
- WO-A1-2010/066850

## Description

L'invention concerne les capteurs d'image, et plus particulièrement ceux qui sont destinés à recueillir des images à la fois à bas niveau de luminance et à haut niveau de luminance.

Les pixels actifs comprennent en général une photodiode et trois, quatre ou cinq transistors MOS permettant de contrôler la lecture des charges générées par la lumière dans la photodiode. Les pixels à quatre transistors fonctionnent en transférant d'abord de la photodiode vers un noeud de stockage capacitif les charges générées par la lumière, puis en reportant sur un conducteur de colonne le potentiel du noeud de stockage ; un des transistors sert à réinitialiser le potentiel du noeud de stockage avant le transfert de charges de la photodiode vers le noeud de stockage. Les pixels à cinq transistors comportent en outre un transistor de réinitialisation du potentiel de la photodiode.

Dans la publication de brevet WO2010/066850, on a décrit un mode de fonctionnement du capteur avec une double durée d'intégration à chaque trame d'image. Après une première durée Ti1, les charges engendrées par la photodiode sont transférées dans le noeud de stockage. Puis, peu avant la fin d'une deuxième durée Ti2 plus longue que la durée Ti1, on échantillonne le potentiel du noeud de stockage dans une capacité d'un circuit de lecture, on réinitialise le potentiel du noeud de stockage, on échantillonne le potentiel de réinitialisation dans une autre capacité, et on transfère de la photodiode au noeud de stockage les charges résultant de la deuxième durée d'intégration. A partir de là, on teste le niveau du potentiel du noeud de stockage. S'il indique un risque de saturation du pixel, on se contente des échantillons déjà stockés pour faire à partir de leur différence une conversion analogique-numérique représentant le niveau d'éclairement reçu par le pixel. Si au contraire le niveau du potentiel du noeud de stockage montre qu'il n'y a pas de risque de saturation, on fait un troisième échantillonnage qui remplace dans la première capacité le niveau précédemment stocké, et on se sert de ce nouvel échantillon pour faire la conversion analogique-numérique de la différence entre le troisième échantillon et le deuxième.

On fait donc un troisième échantillonnage conditionnel en fonction du niveau des charges recueillies pendant la deuxième durée d'intégration. Le choix est fait pixel par pixel au moment de la lecture d'une ligne de pixels.

On peut aussi prévoir que la deuxième durée d'intégration est plus courte que la première. Dans ce cas on teste le niveau de potentiel du noeud de stockage avant le deuxième transfert vers le noeud de stockage ; c'est le potentiel résultant de l'intégration la plus longue. Cette fois, s'il y a risque de saturation on fera le troisième échantillonnage avant de faire la conversion analogique-numérique ; s'il n'y a pas de risque de saturation on ne le fera pas et on fera la conversion analogique-numérique à partir du premier et du deuxième échantillon.

Dans le cas où c'est le niveau résultant de la durée d'intégration la plus courte qui est converti en numérique, le résultat de la conversion est multiplié par le rapport entre la durée la plus longue et la durée la plus courte pour ramener la valeur à la même échelle que le résultat de la conversion du niveau de charges issu de l'intégration la plus longue.

On a remarqué que ce test pour décider du troisième échantillonnage présentait des inconvénients.

Tout d'abord il faut un comparateur (encombrant) pour chaque colonne. Ensuite, le test est fait sur une valeur absolue du potentiel d'un conducteur de colonne recevant le niveau de potentiel du noeud de stockage au moment de la sélection d'une ligne de pixels. On compare ce potentiel à un seuil qui définit le risque de saturation. Le test porte donc sur une valeur absolue de niveau de potentiel, pas sur une valeur différentielle (niveau de potentiel utile moins niveau de réinitialisation). Cela crée une incertitude sur le choix du seuil à utiliser. Par ailleurs, il y a d'autres incertitudes sur la valeur du seuil qu'il faut appliquer au comparateur pour détecter un risque de saturation. Ces incertitudes sont liées aux variations de procédé de fabrication, aux variations de température, aux différences de tension d'offset des transistors de lecture dans les différents pixels, aux différences de tensions de décalage (offset) des comparateurs correspondant aux différentes colonnes de la matrice de pixels. On est donc obligé de prendre des marges importantes pour déterminer le seuil permettant de savoir s'il y a risque de saturation ou non. Cela entraîne une perte de dynamique, c'est-à-dire une réduction de la plage d'éclairements que le capteur peut effectivement mesurer pour une durée d'intégration donnée. Enfin, la nécessité de faire cette comparaison de tension à un autre moment que le moment de l'échantillonnage d'un niveau de potentiel du conducteur de colonne entraîne une consommation de courant supplémentaire. En effet, le conducteur de colonne n'est alimenté que pendant les phases où il doit recopier le niveau de potentiel du noeud de stockage. Ici, il faut qu'il soit alimenté à la fois pendant le test et pendant le troisième échantillonnage qui est postérieur à cette comparaison.

Pour éviter ces inconvénients, l'invention propose d'utiliser des parties du convertisseur analogique-numérique pour tester la tension différentielle entre le premier et le deuxième échantillon après que ces échantillons aient été stockés et avant l'instant prévu pour le troisième échantillonnage. Le convertisseur analogique-numérique est un convertisseur à rampe utilisant une rampe de tension linéaire et un amplificateur différentiel à grand gain qui bascule lorsque la différence de tension sur ses deux entrées devient nulle du fait de la rampe de tension. On appliquera selon l'invention une courte rampe de tension linéaire de durée fixe et de pente connue ; si l'amplificateur a basculé avant la fin de la rampe, on considèrera que l'éclairement est resté au-dessous d'un seuil et on en tirera une conclusion sur un nouvel échantillonnage à faire dans la première capacité. Le troisième échantillonnage, lorsqu'il est effectué, remplace le premier échantillon. La conversion analogique-numérique définitive se fait sur les échantillons stockés après l'instant réservé au troisième échantillonnage, qu'il y ait eu ou non un troisième échantillonnage.

Par conséquent l'invention propose un capteur d'image à pixels actifs comprenant une matrice de pixels organisée en lignes et en colonnes, les pixels d'une même colonne étant reliés à un conducteur de colonne lui-même relié à un circuit de lecture, chaque pixel comportant une photodiode reliée par un transistor de transfert à un noeud de stockage, et un transistor de sélection de ligne pour relier le noeud de stockage au conducteur de colonne ou l'isoler de ce conducteur, le capteur comprenant des moyens pour effectuer, pendant un même cycle d'intégration et de lecture des de stockage, le premier après une première durée d'intégration, le deuxième après une deuxième durée d'intégration différente de la première, des moyens pour faire un premier échantillonnage, dans une première capacité d'échantillonnage du circuit de lecture, du niveau de potentiel pris par le conducteur de colonne après le premier transfert de charges, des moyens pour faire un deuxième échantillonnage, dans une deuxième capacité du circuit de lecture, du niveau de potentiel pris par le conducteur de colonne après une réinitialisation du noeud de stockage, et des moyens pour faire un troisième échantillonnage conditionnel dans la première capacité d'un niveau de potentiel pris après le deuxième transfert de charges et se substituant au niveau pris lors du premier échantillonnage, caractérisé en ce que le circuit de lecture comporte un convertisseur analogique-numérique à rampe comprenant un amplificateur différentiel relié aux deux capacités et des moyens pour appliquer une rampe de tension linéaire à une des capacités, la rampe ayant pour effet de faire basculer l'amplificateur au bout d'une durée variable en fonction des potentiels échantillonnés dans les capacités, et en ce que le capteur comporte des moyens pour appliquer d'abord une rampe provisoire de durée fixe, après le deuxième échantillonnage, l'état de la sortie de l'amplificateur à la fin de la rampe provisoire étant stocké pour autoriser ou interdire le troisième échantillonnage conditionnel, et ensuite une rampe définitive après le deuxième transfert de charges et le troisième échantillonnage s'il a eu lieu pour effectuer une conversion analogique-numérique de la différence entre les tensions échantillonnées dans les deux capacités.

La pente de la rampe provisoire peut-être plus forte que la pente de la rampe définitive pour accélérer la phase de comparaison. La durée de la rampe est fixe.

L'état de la sortie de l'amplificateur à la fin de la rampe provisoire sert non seulement à déclencher ou non le troisième échantillonnage, mais aussi à conserver une information de la décision pour multiplier ensuite ou ne pas multiplier la valeur de la conversion définitive par le rapport entre la durée d'intégration la plus longue et la durée la plus courte.

Dans le cas où le pixel est construit avec des moyens pour effectuer une multiplication d'électrons au sein du pixel avec un coefficient multiplicateur qui n'est pas le même pour les deux durées d'intégration, la valeur de la conversion définitive est multipliée également par le rapport entre le facteur de multiplication utilisé pendant la durée la plus longue et le facteur de multiplication utilisé pendant la durée la plus courte.

Dans une réalisation, la première durée d'intégration est la plus courte. Le basculement de l'amplificateur avant la fin de la rampe indique un éclairement au-dessous d'un seuil déterminé par le niveau à la fin de la rampe, et autorise l'application d'un troisième échantillonnage , l'absence de basculement indique un éclairement au-dessus du seuil et interdit le troisième échantillonnage.

De préférence, la durée de la rampe provisoire est choisie pour que la variation de potentiel entre le début et la fin de la rampe provisoire soit une fraction de la variation entre le début et la fin de la rampe définitive, cette fraction étant inférieure ou égale (de préférence : légèrement inférieure) au rapport des deux durées d'intégration.

Dans une autre réalisation, la première durée est la plus longue. Le basculement de l'amplificateur interdit l'application d'un troisième échantillonnage. Dans ce cas, on prévoit de préférence que la réinitialisation du noeud de stockage après le premier transfert de charges est faite en deux étapes avec deux niveaux de potentiel de réinitialisation différents, avec à chaque fois un échantillonnage du potentiel de réinitialisation dans la deuxième capacité ; la rampe provisoire de test est appliquée entre les deux échantillonnages du niveau de réinitialisation.

D'autres caractéristiques et avantages de l'invention apparaîtront à la lecture de la description détaillée qui suit et qui est faite en référence aux dessins annexés dans lesquels :
- la figure 1 représente la structure d'un pixel et du circuit de lecture d'un capteur selon l'invention ;
- la figure 2 représente un chronogramme de fonctionnement du pixel et du circuit de lecture ;

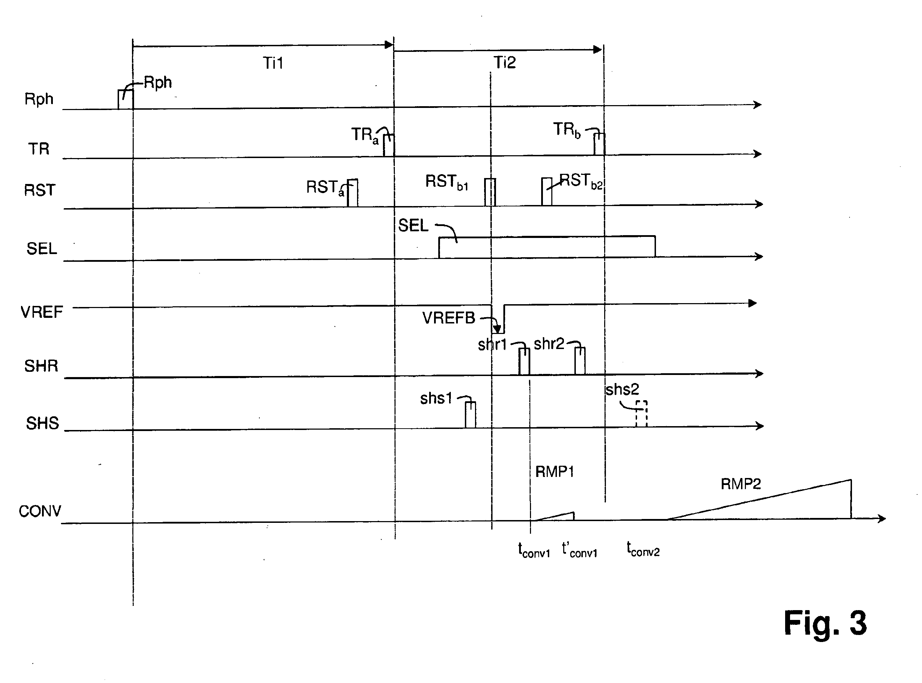

- la figure 3 représente une variante de chronogramme de fonctionnement ;
- la figure 4 représente une variante de circuit de lecture avec un amplificateur à gain programmable.

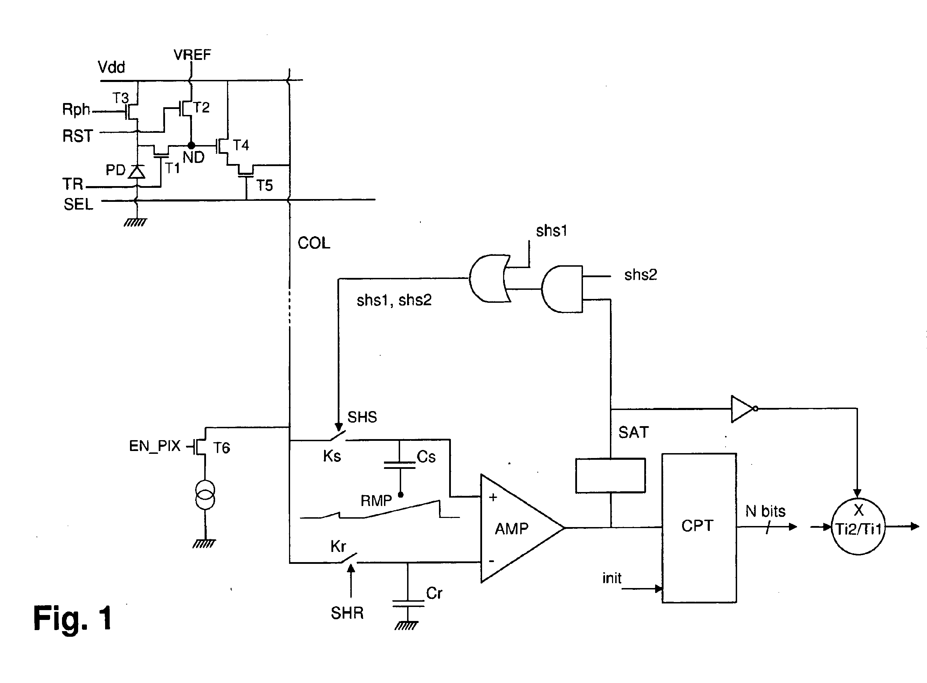

Un pixel actif à cinq transistors et un circuit de lecture d'un capteur selon l'invention sont représentés à la figure 1. La structure du pixel est classique. Il comporte une photodiode PD, un noeud de stockage capacitif ND (représenté par un simple point sur la figure 1, et réalisé en pratique par une diffusion de type N dans une couche de type P), un transistor de transfert de charges T1 entre la cathode de la photodiode et le noeud de stockage, un transistor T2 de réinitialisation du potentiel du noeud de stockage, un transistor T3 de réinitialisation du potentiel de la photodiode, un transistor suiveur T4, un transistor de sélection de ligne T5. Pour un pixel à quatre transistors le transistor T3 serait supprimé.

Le transistor de transfert T1 est commandé par un signal de transfert TR. Le transistor T2 a son drain relié à un potentiel de référence VREF et il est commandé par un signal de commande de commande de réinitialisation RST. Le transistor T3 est relié entre la cathode de la photodiode et un potentiel de référence qui peut être un potentiel d'alimentation Vdd. Il est commandé par un signal de réinitialisation Rph. Le transistor suiveur T4 a son drain relié à un potentiel fixe qui peut être l'alimentation Vdd, sa source reliée au transistor de sélection de ligne T5, et sa grille reliée au noeud de stockage ND. Enfin, le transistor de sélection de ligne T5 a sa grille reliée à un conducteur de sélection de ligne qui relie tous les transistors de sélection de ligne d'une même ligne de pixels ; ce conducteur est commandé par un signal de sélection de ligne SEL propre à cette ligne ; le drain de T5 est relié à la source du transistor suiveur et sa source est reliée à un conducteur de colonne COL commun à tous les pixels d'une même colonne de pixels.

Le conducteur de colonne est relié à un circuit de lecture, au pied de la colonne. Il est également relié à une source de courant à travers un transistor T6. Lorsque le transistor T6 est rendu conducteur par un signal EN_PIX, le transistor T4 du pixel sélectionné se comporte en suiveur de tension et le noeud de stockage reporte son potentiel sur le conducteur de colonne. Le signal EN_PIX sert à isoler la source de courant du conducteur de colonne pour limiter la consommation en dehors des phases d'échantillonnage du potentiel du conducteur de colonne.

Le circuit de lecture comprend des moyens d'échantillonnage pour échantillonner et conserver la valeur du potentiel du conducteur de colonne à divers instants de la séquence de lecture de l'information d'éclairement issue du pixel sélectionné. Ces moyens d'échantillonnage comprennent une capacité Cr et une capacité Cs et des commutateurs respectifs Kr et Ks pour autoriser l'application du potentiel de colonne à ces capacités. Les commutateurs Kr et Ks sont commandés respectivement par des signaux globalement désignés par SHR et SHS.

Le circuit de lecture comprend aussi un convertisseur analogique-numérique pour convertir en numérique la tension différentielle entre le potentiel échantillonné sur la capacité Cr, qui est un niveau de potentiel de réinitialisation du noeud de stockage ND, et le potentiel échantillonné sur la capacité Cs, qui est un niveau de potentiel utile après un transfert de charges de la photodiode vers le noeud de stockage.

Le convertisseur est un convertisseur à rampe. Les convertisseurs à rampe comprennent essentiellement un générateur de rampe de tension linéaire, un amplificateur différentiel à autozéro à grand gain AMP qui bascule lorsque les tensions sur ses deux entrées deviennent égales au cours de l'évolution de la rampe, et un compteur CPT synchronisé avec le générateur de rampe et qui compte à haute fréquence à partir du début de la rampe jusqu'au basculement de l'amplificateur. Le générateur de rampe linéaire est représenté par un simple point relié à la capacité Cs.

Le fonctionnement d'un tel convertisseur est le suivant : pour convertir la tension différentielle entre les capacités, on relie les capacités aux entrées de l'amplificateur différentiel, et on applique à un instant initial (marquant le début de la conversion) une rampe de tension linéaire à l'autre borne des capacités et une impulsion de démarrage au compteur. La sortie de l'amplificateur différentiel bascule et définit la fin du comptage lorsque les tensions deviennent égales sur les deux bornes des capacités reliées à l'amplificateur. Le contenu du compteur représente alors le temps qu'il a fallu pour atteindre cette égalité ; la rampe de tension étant linéaire, ce temps est proportionnel à la différence des potentiels qui étaient présents sur les entrées à l'instant initial de démarrage de la rampe. Le contenu du compteur après la fin de la rampe est mis en mémoire et représente une valeur d'éclairement obtenue par double échantillonnage dans les capacités.

La rampe peut être commune à tous les circuits de lecture, c'est-à-dire à toutes les colonnes de la matrice.

Le compteur peut être prévu individuellement dans chaque circuit de lecture; ou bien on peut prévoir un compteur unique pour toutes les colonnes, et dans ce cas le circuit de lecture associé à une colonne comporte une mémoire apte à stocker le contenu du compteur au moment du basculement de l'amplificateur différentiel de cette colonne.

Dans ce qui suit on considère à titre d'exemple qu'il y a un compteur dans chaque circuit de lecture.

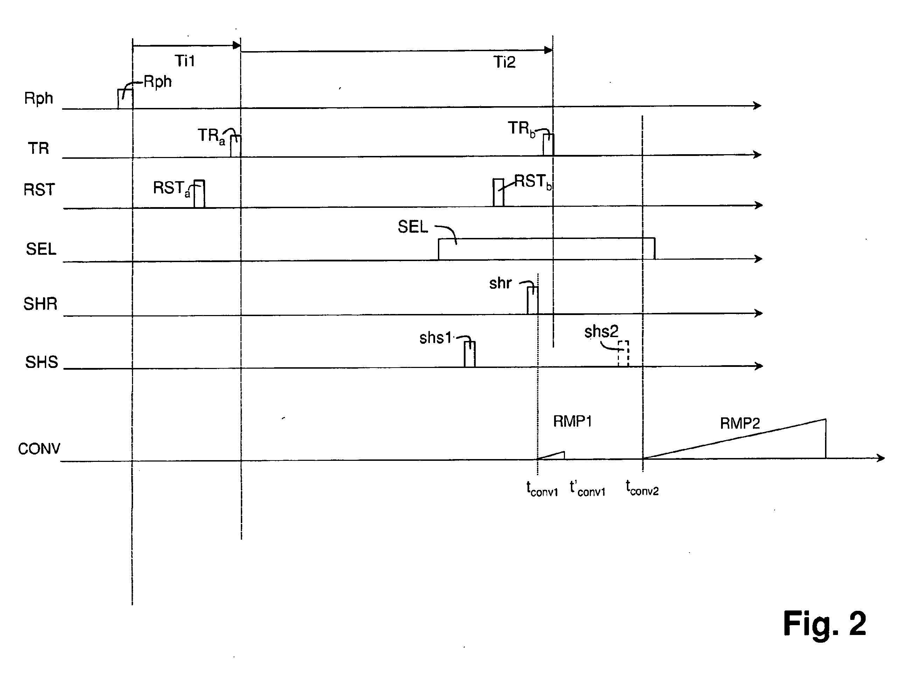

On va maintenant décrire en référence au chronogramme de la figure 2 le détail de la séquence de mesure de l'éclairement reçu par un pixel au cours d'une trame d'image et on expliquera en même temps les autres éléments de la figure 1.

La capture d'une image se fait trame par trame en utilisant deux durées d'intégration consécutives de valeurs différentes Ti1 et Ti2 au cours de la même trame. Le signal recueilli pendant la durée la plus courte est utilisé pour les pixels recevant beaucoup de lumière, le signal recueilli pendant la durée la plus longue est utilisé pour les pixels recevant la durée la plus longue. Le choix est fait pixel par pixel et trame par trame. Dans le cas de la figure 2, la première durée Ti1 est la plus courte.

La séquence de mesure est la suivante. On suppose, bien que ce ne soit pas obligatoire, qu'un transistor T3 de réinitialisation de la photodiode est prévu dans le pixel. Si un tel transistor n'était pas prévu, on réinitialiserait la photodiode par une mise en conduction simultanée des transistors T1 et T2.

Un créneau temporel de réinitialisation Rph est appliqué à la grille du transistor T3 pour toute une ligne de pixels. Ce créneau agit pour vider vers le potentiel d'alimentation Vdd les charges stockées dans la photodiode PD. Tant que dure ce créneau, l'intégration de charges dans la photodiode est empêchée. Le créneau Rph est fourni indépendamment pour chaque ligne et est décalé d'une ligne à l'autre. Seul le chronogramme correspondant à une ligne est représenté.

Une première intégration de charges dans la photodiode PD se produit pendant une durée Ti1.

A un instant intermédiaire au cours de cette durée, on produit sur la grille des transistors T2 de tous les pixels de la ligne un bref créneau RSTₐ qui rend conducteur ces transistors. Le potentiel du noeud de stockage ND est réinitialisé, pour tous les transistors de la ligne, à une valeur fixe liée au potentiel VREF.

Puis un premier créneau de transfert de charges TRₐ est appliqué à la grille de commande des transistors de transfert T1 de la ligne. Les charges générées par la lumière dans la photodiode se déversent dans le noeud de stockage. Elles modifient le potentiel de ce noeud. La fin de la première durée d'intégration de charges Ti1 est définie par la fin du premier créneau de transfert TRₐ.

Une deuxième durée d'intégration Ti2 commence alors. La photodiode a été vidée de ses charges pendant le créneau TRₐ et intègre maintenant d'autres charges.

Avant la fin de la durée Ti2, on établit un créneau SEL de sélection de la ligne de pixels pour enclencher le processus de lecture des pixels de cette ligne. Ce créneau rend conducteur le transistor de sélection de ligne T5. Ceci active le transistor suiveur T4 et reporte le potentiel du noeud de stockage ND sur le conducteur de colonne COL (à une tension grille-source de transistor près). Le conducteur de colonne prend alors un premier niveau de potentiel. Le créneau SEL reste actif pendant toute la durée de lecture des pixels de la ligne considérée, puis il s'interrompt et ce n'est qu'après cette interruption qu'un créneau semblable peut être appliqué à une autre ligne. Toutefois, on peut envisager que le signal SEL ne soit pas continu pendant les différentes opérations qui suivent mais activé ponctuellement seulement au moment des échantillonnages SHR et SHS. Pour simplifier on a représenté un créneau continu englobant la durée de tous les signaux SHR et SHS. Pendant le créneau SEL sont effectuées les opérations suivantes :
- un créneau de commande shs1 est appliqué au commutateur Ks dans le circuit de lecture, pour recueillir dans une première capacité Cs du circuit de lecture un premier échantillon du potentiel présent sur le conducteur de colonne ; ce potentiel résulte du premier transfert de charges et dépend donc de l'éclairement du pixel pendant la première durée d'intégration Ti1 ;
- un deuxième créneau de réinitialisation RST_{b} est appliqué aux grilles des transistors T2 de la ligne de pixels ; le potentiel du noeud de stockage est réinitialisé à une valeur fixe ; un créneau de commande shr est alors appliqué au commutateur Kr dans le circuit de lecture, pour prendre un deuxième échantillon représentant le potentiel de colonne réinitialisé ; cet échantillon est stocké dans la deuxième capacité d'échantillonnage Cr du circuit de lecture ;

- après la fin du créneau shr, on démarre une opération qu'on peut appeler conversion provisoire par le convertisseur analogique-numérique à rampe ; il ne s'agit que d'une opération de conversion partielle car on n'a pas besoin à ce stade de recueillir une valeur numérique mais seulement un bit d'information de vérification du dépassement ou non-dépassement d'un seuil d'éclairement reçu pendant la première durée d'intégration ; une première rampe de tension linéaire ou rampe provisoire RMP1 est appliquée à une borne d'une des capacités, par exemple la capacité Cs ; elle a une durée fixe d'un instant t_{conv1} à un instant t'_{conv1} et la pente de la rampe est fixe (elle peut être plus forte que la pente de la rampe qui servira lors de la conversion analogique-numérique définitive, une pente plus forte permettant d'atteindre plus vite le seuil défini par le niveau de potentiel sur l'entrée de l'amplificateur à la fin de la rampe) ; au bout de cette durée fixe, l'amplificateur d'entrée AMP du convertisseur a basculé ou n'a pas basculé ; s'il a basculé, c'est que le niveau d'éclairement est faible, au-dessous d'un seuil ; s'il n'a pas basculé c'est que le niveau est au-dessus du seuil ; l'information de basculement ou non-basculement est conservée en mémoire, par exemple dans une bascule qui fournit un signal SAT ;
- cette information de basculement de l'amplificateur sert d'entrée à un circuit logique (ici une porte ET et une porte OU) qui autorise ou non l'application ultérieure d'une commande shs2, qui est une troisième commande d'échantillonnage , dans le cas où le niveau d'éclairement est élevé (le comparateur n'a pas basculé avant le temps t'_{conv1}), l'échantillonnage ultérieur shs2 n'est pas autorisé ; dans le cas où l'amplificateur a basculé, l'échantillonnage shs2 est autorisé ;
- on applique ensuite, pour tous les pixels de la ligne, un deuxième créneau de transfert TR_{b} à la grille du transistor de transfert T1 ; les charges intégrées pendant la durée Ti2 dans la photodiode se déversent dans le noeud de stockage ND ; la durée Ti2 se termine à la fin du créneau TR_{b} ; le potentiel du conducteur de colonne suit (à une tension grille-source près) le nouveau potentiel du noeud de stockage suite à ce deuxième transfert de charges ;

- la troisième commande d'échantillonnage shs2, postérieure au temps t'_{conv1}, place dans la capacité Cs un échantillon du potentiel du conducteur de colonne en substitution du contenu actuel de la capacité Cs ; ce potentiel représente le niveau du noeud de stockage après le déversement des charges de la photodiode à la fin de la deuxième durée d'intégration Ti2 ;
- on exécute enfin la conversion analogique-numérique définitive de la différence entre le contenu de la capacité Cr et le contenu de la capacité Cs ; ce dernier représente le signal utile résultant de la deuxième ou de la première durée d'intégration selon que le signal shs2 a été produit ou non ; cette étape de conversion définitive s'exécute avec une rampe de tension linéaire définitive RMP2 qui repart de zéro à un instant t_{conv2} et qui a une durée suffisante pour permettre la conversion de la tension différentielle stockée dans les capacités.

La pente et la durée de la première rampe de conversion RMP1 sont choisies pour que le basculement du comparateur à la fin de cette durée corresponde à la limite d'éclairement qui risquerait de saturer le pixel si la deuxième durée d'intégration était utilisée. Le niveau de potentiel atteint à la fin de la rampe provisoire sur l'entrée de l'amplificateur différentiel est égal à une fraction du niveau de potentiel atteint à la fin de la rampe définitive. Cette fraction est de préférence légèrement inférieure au rapport entre la durée Ti1 et la durée Ti2.

Dans le cas où l'amplificateur AMP n'a pas basculé avant l'instant t'_{conv}i, le convertisseur convertit le niveau de potentiel issu de la première durée d'intégration mais le résultat de la conversion doit être multiplié par le rapport Ti2/Ti1 pour le ramener à la même échelle que si la conversion portait sur le résultat de la deuxième durée d'intégration. Le résultat SAT du test effectué à l'instant t'_{conv1} est donc gardé en mémoire pour autoriser ou interdire cette multiplication.

La multiplication peut être faite en dehors du capteur.

Dans le cas où le pixel est construit avec des moyens pour effectuer une multiplication d'électrons au sein du pixel avec un coefficient multiplicateur qui n'est pas le même pour les deux durées d'intégration, la valeur de la conversion définitive est multipliée également par le rapport entre le facteur de multiplication utilisé pendant la durée la plus longue et le facteur de multiplication utilisé pendant la durée la plus courte.

On comprendra que la durée du test peut être extrêmement courte, et par conséquent elle ne ralentit pas de manière significative le processus de lecture du pixel. En effet, si le rapport des durées Ti2 et Ti1 est par exemple de 10, le seuil d'éclairement pour lequel le comparateur doit basculer est faible (un dixième de la plage d'éclairements mesurable avec le premier temps d'intégration). Le comparateur va donc basculer très vite après le début de la rampe pour atteindre ce seuil surtout si la pente de la rampe est forte. La rampe peut être forte car on n'a pas besoin de beaucoup de précision pour cette détection de seuil d'éclairement (on a seulement besoin de constance).

Dans une variante de réalisation, on peut prévoir que la première durée d'intégration Ti1 est la plus longue des deux durées. Le test de condition de troisième échantillonnage shs2 se fait encore sur le résultat du premier transfert de charge mais le seuil à prévoir n'est pas le même et le sens de la condition est inversé : si l'éclairement dépasse un seuil on fait le troisième échantillonnage shs2, sinon on ne le fait pas.

On peut exécuter la même séquence qu'à la figure 2. Un inconvénient est qu'il faudrait augmenter considérablement la pente de la rampe si on ne veut pas que la durée de la rampe provisoire RMP1 soit presque la même que la durée de la rampe définitive RMP2. En effet, le seuil de saturation à détecter est celui qui résulte de l'éclairement pendant la durée la plus longue Ti1.

Alternativement, pour éviter cet inconvénient, on peut modifier de la manière suivante la partie concernant la réinitialisation du potentiel du noeud de stockage. Au lieu de faire une réinitialisation simple (RST_{b}) suivie d'un échantillonnage du potentiel de stockage on fait deux réinitialisations consécutives RSTb₁ et RST_{b2} avec deux échantillonnages consécutifs dans la capacité Cr au moyen de deux signaux d'échantillonnage shr1 et shr2 ; la première réinitialisation établit dans le noeud de stockage un potentiel qui n'est pas du tout un potentiel haut VREF définissant le zéro de la mesure mais qui est un potentiel bas VREFB qui est proche du seuil qui va servir à conditionner le troisième échantillonnage, c'est-à-dire un potentiel bas proche d'un niveau de saturation du pixel. On effectue le test de condition de troisième échantillonnage shs2 sur la différence entre le niveau utile échantillonné lors de shs1 et ce niveau de réinitialisation bas défini par VREFB. Une courte rampe provisoire RMP1 suffira pour déterminer si on est en deçà ou au-delà d'un seuil de saturation et pour imposer un troisième échantillonnage shs2 si on est au delà.

La deuxième réinitialisation RST_{b2} est faite avec un niveau de réinitialisation normal VREF. Le résultat est échantillonné après la fin de la rampe RMP1 dans la capacité Cr. Puis, les charges utiles obtenues pendant le temps d'intégration Ti2 sont transférées dans le noeud de stockage par le créneau TR_{b} et l'échantillonnage shs2 est effectué ou non selon le résultat du test.

La rampe définitive est appliquée à un instant t_{conv2} après l'instant réservé à l'impulsion d'échantillonnage shs2, que cette impulsion ait été autorisée ou non. Cette conversion porte sur la différence entre les échantillons établis par les impulsions shr2 et shs1 (cas d'éclairement inférieur à un seuil) ou les échantillons établis par les impulsions shr2 et shs2 (cas d'éclairement supérieur au seuil). La mesure n'est une mesure avec double échantillonnage corrélé véritable que dans le deuxième cas.

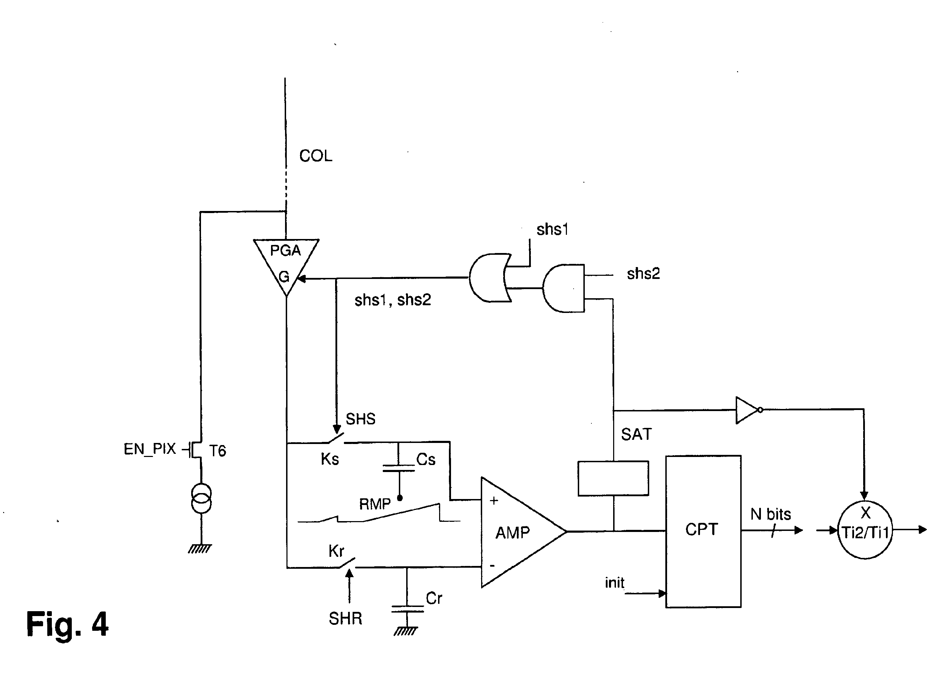

Une amélioration possible du circuit de lecture en pied de colonne consiste à prévoir une amplification conditionnelle du signal sur le conducteur de colonne. La condition est la même que la condition d'utilisation du troisième échantillonnage shs2. Dans ce cas, comme représenté à la figure 4, on insère entre le conducteur de colonne et les circuits d'échantillonnage (capacités Cr, Cs et interrupteurs Kr, Ks) un amplificateur à faible bruit à gain programmable PGA. Dans le cas d'un éclairement au-dessous d'un seuil, détecté par la rampe provisoire de durée fixe, on prend non seulement une décision sur le troisième échantillonnage mais aussi une décision d'application d'un gain G (supérieur à 1) au signal, par exemple un gain de 32. Dans le cas d'un éclairement au-dessus du seuil, on commande l'amplificateur PGA pour qu'il ait un gain unitaire.

Cette amélioration exige un chronogramme avec une première durée d'intégration plus courte que la deuxième (figure 2).

L'offset éventuel de cet amplificateur ne perturbe pas la lecture car l'amplificateur est présent aussi bien dans la mesure du niveau de réinitialisation que dans la mesure du niveau utile après déversement de charges. Le double échantillonnage reste un double échantillonnage corrélé véritable dans le cas de faibles éclairements.

En appliquant un tel gain on peut réduire la durée d'intégration longue pour accélérer la cadence des prises d'images.

En cas de non utilisation du gain conditionnel, c'est-à-dire en cas de fort éclairement, on peut appliquer un coefficient multiplicateur, égal au gain conditionnel G, aux mesures faites pour les forts éclairements, si on veut ramener ces mesures à la même échelle que pour les faibles éclairements.

## Revendications

1. Capteur d'image à pixels actifs comprenant une matrice de pixels organisée en lignes et en colonnes, les pixels d'une même colonne étant reliés à un conducteur de colonne (COL) lui-même relié à un circuit de lecture, chaque pixel comportant une photodiode reliée par un transistor de transfert (T1) à un noeud de stockage, et un transistor de sélection de ligne (T5) pour relier le noeud de stockage au conducteur de colonne ou l'isoler de ce conducteur, le capteur comprenant des moyens pour effectuer pendant un même cycle d'intégration et de lecture des charges d'un pixel deux transferts de charges de la photodiode vers le noeud de stockage, le premier après une première durée d'intégration (Ti1), le deuxième après une deuxième durée d'intégration (Ti2) différente de la première, des moyens pour faire un premier échantillonnage, dans une première capacité d'échantillonnage (Cs) du circuit de lecture, du niveau de potentiel pris par le conducteur de colonne après le premier transfert de charges, des moyens pour faire un deuxième échantillonnage, dans une deuxième capacité (Cr) du circuit de lecture, du niveau de potentiel pris par le conducteur de colonne après une réinitialisation du noeud de stockage, et des moyens pour faire un troisième échantillonnage conditionnel dans la première capacité d'un niveau de potentiel pris après le deuxième transfert de charges et se substituant au niveau pris lors du premier échantillonnage, **caractérisé en ce que** le circuit de lecture comporte un convertisseur analogique-numérique à rampe comprenant un amplificateur différentiel relié aux deux capacités et des moyens pour appliquer une rampe de tension linéaire à une des capacités, la rampe ayant pour effet de faire basculer l'amplificateur au bout d'une durée variable en fonction des potentiels échantillonnés dans les capacités, et **en ce que** le capteur comporte des moyens pour appliquer d'abord une rampe provisoire (RMP1) de durée fixe, après le deuxième échantillonnage, l'état de la sortie de l'amplificateur à la fin de la rampe provisoire étant utilisé pour autoriser ou interdire le troisième échantillonnage conditionnel, et ensuite une rampe définitive (RMP2) après le deuxième transfert de charges et le troisième échantillonnage s'il a eu lieu, pour effectuer une conversion analogique-numérique définitive de la différence entre les tensions échantillonnées dans les deux capacités.

2. Capteur selon la revendication 1, **caractérisé en ce que** l'état de la sortie de l'amplificateur à la fin de la rampe provisoire est conservé en mémoire pour fournir une information sur la nécessité de multiplier le résultat de la conversion analogique-numérique définitive par le rapport de la durée d'intégration la plus longue à la durée la plus courte.

3. Capteur selon l'une des revendications 1 et 2, **caractérisé en ce que** la rampe provisoire a une pente plus forte que la rampe définitive.

4. Capteur selon l'une des revendications 1 à 3, **caractérisé en ce que** la première durée d'intégration est plus courte que la deuxième et **en ce que** le basculement de l'amplificateur avant la fin de la rampe autorise l'application d'un troisième échantillonnage.

5. Capteur selon la revendication 4, **caractérisé en ce que** la durée de la rampe provisoire est choisie pour que la variation de potentiel entre le début et la fin de la rampe définitive soit une fraction de la variation entre le début et la fin de la rampe provisoire, cette fraction étant inférieure ou égale rapport des deux durées d'intégration.

6. Capteur selon l'une des revendications 1 à 3, **caractérisé en ce que** la première durée est plus longue que la deuxième et **en ce que** le basculement de l'amplificateur interdit l'application d'un troisième échantillonnage.

7. Capteur selon la revendication 6, **caractérisé en ce que** la réinitialisation du noeud de stockage après le premier transfert de charges est faite en deux étapes avec deux niveaux de potentiel de réinitialisation différents, le niveau dans la première étape étant plus bas que le niveau dans la deuxième étape, et avec à chaque fois un échantillonnage du potentiel de réinitialisation dans la deuxième capacité, et la rampe provisoire de test est appliquée entre les deux échantillonnages du potentiel de réinitialisation.

8. Capteur selon l'une des revendications 1 à 5, **caractérisé en ce qu'**il comporte des moyens d'amplification conditionnelle (PGA) du signal sur le conducteur de colonne, la condition étant la même que la condition d'utilisation du troisième échantillonnage.

## Patentansprüche

1. Bildsensor mit aktiven Pixeln, der Folgendes umfasst: eine Matrix von Pixeln, die in Reihen und Spalten organisiert sind, wobei die Pixel einer selben Spalte mit einem Spaltenleiter (COL) verbunden sind, der wiederum mit einer Leseschaltung verbunden ist, wobei jedes Pixel eine Fotodiode umfasst, die durch einen Übertragungstransistor (T1) mit einem Speicherknoten verbunden ist, und einen Reihenauswahltransistor (T5) zum Verbinden des Speicherknotens mit oder zum Abtrennen desselben von dem Spaltenleiter, wobei der Sensor Mittel zum Bewirken, während eines selben Integrations- und Lesezyklus von Ladungen eines Pixels, von zwei Ladungsübertragungen der Fotodiode zu dem Speicherknoten umfasst, die erste nach einer ersten Integrationsdauer (Ti1), die zweite nach einer zweiten Integrationsdauer (Ti2), die sich von der ersten unterscheidet, Mittel zum Durchführen einer ersten Abtastung, in einem ersten Abtastkapazitätsglied (Cs) der Leseschaltung, des vom Spaltenleiter nach der ersten Ladungsübertragung gezogenen Potentialpegels, Mittel zum Bewirken einer zweiten Abtastung, in einem zweiten Kapazitätsglied (Cr) der Leseschaltung, des Potentialpegels, den vom Spaltenleiter nach einer Neuinitialisierung des Speicherknotens gezogen wird, und Mittel zum Bewirken einer dritten konditionellen Abtastung, im ersten Kapazitätsglied, eines Potentialpegels, den nach der zweiten Ladungsübertragung gezogen wird und den auf dem bei der ersten Abtastung gezogenen Pegel ersetzt, **dadurch gekennzeichnet, dass** die Leseschaltung einen Rampen-Analog-Digital-Wandler mit einem Differentialverstärker umfasst, der mit den zwei Kapazitätsgliedern verbunden ist, und Mittel zum Anlegen einer linearen Spannungsrampe an eines der Kapazitätsglieder, wobei die Rampe eine Umschaltung des Verstärkers am Ende einer variablen Dauer in Abhängigkeit von in den Kapazitätsgliedern abgetasteten Potentialen bewirkt, und dadurch, dass der Sensor Mittel umfasst, um zunächst eine provisorische Rampe (RMP1) mit fester Dauer nach der zweiten Abtastung anzulegen, wobei der Zustand des Ausgangs des Verstärkers am Ende der provisorischen Rampe zum Zulassen oder Sperren der dritten konditionellen Abtastung benutzt wird, und dann eine definitive Rampe (RMP2) nach der zweiten Ladungsübertragung und ggf. der dritten Abtastung, um eine definitive Analog-Digital-Umwandlung der Differenz zwischen den in den beiden Kapazitätsgliedern abgetasteten Spannungen durchzuführen.

2. Sensor nach Anspruch 1, **dadurch gekennzeichnet, dass** der Zustand des Ausgangs des Verstärkers am Ende der provisorischen Rampe im Speicher konserviert wird, um eine Information über die Notwendigkeit zu geben, das Ergebnis der definitiven Analog-Digital-Wandlung in Bezug auf die längste Integrationsdauer mit der kürzesten Dauer zu multiplizieren.

3. Sensor nach einem der Ansprüche 1 und 2, **dadurch gekennzeichnet, dass** die provisorische Rampe eine stärkere Steigung hat als die definitive Rampe.

4. Sensor nach einem der Ansprüche 1 bis 3, **dadurch gekennzeichnet, dass** die erste Integrationsdauer kürzer ist als die zweite, und dadurch, dass das Umschalten des Verstärkers vor dem Ende der Rampe die Anwendung einer dritten Abtastung zulässt.

5. Sensor nach Anspruch 4, **dadurch gekennzeichnet, dass** die Dauer der provisorischen Rampe so gewählt wird, dass die Potentialvariation zwischen dem Anfang und dem Ende der definitiven Rampe ein Bruchteil der Variation zwischen dem Anfang und dem Ende der provisorischen Rampe ist, wobei dieser Bruchteil gleich oder kleiner als die beiden Integrationsdauern ist.

6. Sensor nach einem der Ansprüche 1 bis 3, **dadurch gekennzeichnet, dass** die erste Dauer länger ist als die zweite, und dadurch, dass das Umschalten des Verstärkers die Anwendung einer dritten Abtastung sperrt.

7. Sensor nach Anspruch 6, **dadurch gekennzeichnet, dass** die Neuinitialisierung des Speicherknotens nach der ersten Ladungsübertragung in zwei Stufen mit zwei unterschiedlichen Neuinitialisierungspotentialpegeln, wobei der Pegel in der ersten Stufe niedriger ist als der Pegel in der zweiten Stufe, und mit jeder Abtastung des Neuinitialisierungspotentials im zweiten Kapazitätsglied erfolgt, und die provisorische Prüframpe zwischen zwei Abtastungen des Neuinitialisierungspotentials angewandt wird.

8. Sensor nach einem der Ansprüche 1 bis 5, **dadurch gekennzeichnet, dass** er konditionelle Mittel (PGA) zum Verstärken des Signals auf dem Spaltenleiter umfasst, wobei die Bedingung dieselbe ist wie die Anwendungsbedingung der dritten Abtastung.

## Claims

1. An image sensor with active pixels comprising a matrix of pixels organized in rows and columns, the pixels of one and the same column being linked to a column conductor (COL) itself linked to a reading circuit, each pixel comprising a photodiode linked by a transfer transistor (T1) to a storage node, and a row selection transistor (T5) for linking the storage node to the column conductor or isolating it from this conductor, the sensor comprising means for performing during one and the same cycle of integration and reading of the charge of a pixel two transfers of charge from the photodiode to the storage node, the first after a first duration of integration (Ti1), the second after a second duration of integration (Ti2) different from the first, means for doing a first sampling, in a first sampling capacitor (Cs) of the reading circuit, of the level of potential taken by the column conductor after the first transfer of charge, means for doing a second sampling, in a second capacitor (Cr) of the reading circuit, of the level of potential taken by the column conductor after a reinitialization of the storage node, and means for doing a third conditional sampling in the first capacitor of a level of potential taken after the second transfer of charge and replacing the level taken during the first sampling, **characterized in that** the reading circuit comprises a ramp-type analog-digital converter comprising a differential amplifier linked to the two capacitors and means for applying a linear voltage ramp to one of the capacitors, the effect of the ramp being to cause the amplifier to toggle after a variable duration dependent on the potentials sampled in the capacitors, and **in that** the sensor comprises means for applying firstly a provisional ramp (RMP1) of fixed duration, after the second sampling, the state of the output of the amplifier at the end of the provisional ramp being used to enable or disable the third conditional sampling, and thereafter a definitive ramp (RMP2) after the second transfer of charge and the third sampling if it has taken place, for performing a definitive analog-digital conversion of the difference between the voltages sampled in the two capacitors.

2. The sensor as claimed in claim 1, **characterized in that** the state of the output of the amplifier at the end of the provisional ramp is preserved in memory so as to provide an item of information on the necessity to multiply the result of the definitive analog-digital conversion by the ratio of the longer duration of integration to the shorter duration.

3. The sensor as claimed in claim 1, **characterized in that** the provisional ramp has a steeper slope than the definitive ramp.

4. The sensor as claimed in one of claims 1 to 3, **characterized in that** the first duration of integration is shorter than the second and **in that** the toggling of the amplifier before the end of the ramp enables the application of a third sampling.

5. The sensor as claimed in claim 4, **characterized in that** the duration of the provisional ramp is chosen so that the variation of potential between the start and the end of the definitive ramp is a fraction of the variation between the start and the end of the provisional ramp, this fraction being lower than or equal to the ratio of the two durations of integration.

6. The sensor as claimed in one of claims 1 to 3, **characterized in that** the first duration is longer than the second and **in that** the toggling of the amplifier disables the application of a third sampling.

7. The sensor as claimed in claim 6, **characterized in that** the reinitialization of the storage node after the first transfer of charge is done in two steps with two different levels of reinitialization potential, the level in the first step being lower than the level in the second step, and on each occasion a sampling of the reinitialization potential in the second capacitor, and the provisional test ramp is applied between the two samplings of the reinitialization potential.

8. The sensor as claimed in one of claims 1 to 5, **characterized in that** it comprises means of conditional amplification (PGA) of the signal on the column conductor, the condition being the same as the condition of use of the third sampling.
